# EUROPEAN PATENT SPECIFICATION

(11) **EP 4 482 687 B1**
(45) Date of publication and mention of the grant of the patent: **21.01.2026**
(21) Application number: 23705565.2
(22) Date of filing: 20.02.2023
(51) Int. Cl.: B32B 27/30, B32B 27/32, C08L 27/16, C09J 127/16, F16L 9/12, C08L 23/06, C08L 23/08

(54) **THERMOPLASTIC POLYMERIC COMPOSITION HAVING GOOD ADHESION TO POLYOLEFIN AND FLUOROPOLYMER BASED MATERIALS**
THERMOPLASTISCHE POLYMERZUSAMMENSETZUNG MIT GUTER HAFTUNG AUF POLYOLEFINEN SOWIE AUF FLUORPOLYMEREN
COMPOSITION POLYMÉRIQUE THERMOPLASTIQUE AYANT UNE BONNE ADHÉSION AUX MATÉRIAUX À BASE DE POLYOLÉFINES ET DE FLUOROPOLYMÈRES

(30) Priority: 24.02.2022 EP 22158624
(43) Date of publication of application: 01.01.2025
(73) Proprietor: Syensqo Specialty Polymers Italy S.p.A., 20021 Bollate (MI) (IT)
(72) Inventor: MIRENDA, Marco, 20017 Rho (MI) (IT); SANGUINETI, Aldo, 20133 Milano (IT)
(74) Representative: Briatore, Andrea
(86) International application number: PCT/EP2023/054198
(87) International publication number: WO 2023/161185

(56) References cited:
- EP-A1- 1 637 319
- WO-A1-2019/183139
- CN-A- 113 004 832
- US-A1- 2009 188 578
- US-B2- 7 094 836

## Description

### Technical Field

This application claims priority from the patent application filed on 24 February 2022 in EUROPE with Nr 22158624.1.

The present invention relates to thermoplastic polymeric compositions having good adhesive properties both on polyolefin based materials and fluoropolymer based materials, to a method for preparing these compositions, and to multilayer structures wherein one of the layers is made of the thermoplastic composition of the invention.

### Background Art

Polyolefins, especially polymers of ethylene and propylene, are used for manufacturing pipes, tanks, containers and receptacles for the transport and storage of water, chemicals and liquid hydrocarbons, in particular oils and fuels. The chemical resistance and the impermeability of these polymers with respect to these hydrocarbons are not however always sufficient for all the usages for which they are intended. To overcome this drawback, a barrier layer of another polymer is interposed between the hydrocarbon to be transported or stored and the polyolefin. Polymers that are both chemically resistant and impermeable frequently used for this purpose are fluoropolymers, in particular polymers and copolymers of vinylidene fluoride (VDF).

However fluoropolymers do not adhere well to polyolefins. Hence, compositions have been developed with a view to improving the adhesion properties of the fluoropolymers.

The present invention aims to provide a composition that makes it possible to strongly adhere, in the form of a single adhesive layer, a fluoropolymer layer to a non-compatible polyolefin polymer layer.

Document EP-A-0650987, describes fluoropolymers with adhesive properties, the main fluorine-containing hydrocarbon-based chains of which are grafted by compounds comprising reactive or polar functional groups that have adhesive properties. These functional groups may be carboxyl groups, carboxylic anhydride residues, epoxy groups, hydroxyl groups, isocyanate groups, ester groups, amide groups, amino groups and hydrolysable groups containing a silyl or cyano radical. These polymers do not however adhere well enough to polyolefins.

Document EP-B-206689 concerns a laminate comprising at least two different layers of adhesive that are in contact composed of a fluoropolymer modified by a carboxyl, acid anhydride, hydroxyl or epoxide group and an α-olefin polymer modified by a carboxyl, acid anhydride, hydroxyl or epoxide group different from the preceding one. These two different layers of adhesive may be placed on a substrate layer prepared from a material chosen from various polymers including polyvinylidene fluoride, polyethylene and nylon. Thus, a four-layer laminate is mentioned that comprises a layer of polyvinylidene fluoride bonded to a layer of polyethylene by means of two different layers of adhesive. This multilayer structure has, in particular, the drawback of being composed of two layers of adhesive and therefore four layers in total, which poses technical problems during coextrusion on an industrial scale, it being technically easier to envisage if it is limited to three layers, therefore with a single layer of adhesive.

Document US 2009/324867A describes a polymer composition with adhesive properties comprising a fluoropolymer A grafted with functional groups f1, a polyolefin B grafted with functional groups f2 chosen from acid and anhydride groups, an olefin copolymer C having functional groups f3 capable of reacting with the functional groups f1. The composition is predominantly made using functionalized polymers.

Document US 7094836B2 describes a compatibilizer for blends of polyolefins and fluoropolymers comprising the reaction product of a fluoropolymer and a polyolefin having functional groups which react with each other. The document also describes an alternative compatibilizer comprising a fluoropolymer and a polyolefin having functional groups which do not react with each other, and a third component having at least two functional groups reacting respectively with the functional groups of the polyolefin and of the fluoropolymer. In all examples the weight ratio between the functionalized polyolefin and the functionalized fluoropolymer is 1 or more.

There is still a need for further improved thermoplastic compositions which can be easily prepared and processed and which have even further improved adhesion on both fluoropolymer based materials and polyolefin based materials. In particular there is a need for thermoplastic compositions of this type which can comprise relatively high molecular weight polymers so to withstand continuous application temperatures of 100°C and above, and which can be prepared by compounding the ingredients in a standard extrusion equipment, using relatively mild temperatures and pressures.

### Summary of invention

The present invention relates to A thermoplastic polymeric composition comprising:
a) one or more functionalized polyolefin as component A
b) one or more functionalized fluoropolymer as component B
c) one or more non functionalized polyolefin as component C
d) one or more non functionalized fluoropolymer as component D
wherein,
- the total amount of components A and B is 1-50% by weight of the total amount of components A, B, C and D,
- the total amount of components C and D is 50-99% by weight of the total amount of components A, B, C and D,
- the weight ratio between components A and B is from 1:1.2 to 1:10,
- the weight ratio between components C and D is from 1:1.2 to 1:5
- said one or more functionalized polyolefin (A) comprising functional groups X and said one or more functionalized fluoropolymer (B) comprising functional groups Y, and
- one of the following conditions i) or ii) is satisfied:
   i) said functional groups X and Y are reactive with each other
   ii) said functional groups are non reactive with each other and said thermoplastic polymeric composition comprises an additional component (E) said component (E) consisting of one or more reactive compatibilizer compounds, said reactive compatibilizer compounds comprising at least one free functional group which is reactive with functional group X and one free functional groups which is reactive with functional group Y for each molecule of said reactive compatibilizer compound.

### Description of embodiments

The polymeric thermoplastic composition of the present invention comprises four essential components:
a) one or more functionalized polyolefin as component A
b) one or more functionalized fluoropolymer as component B
c) one or more non functionalized polyolefin as component C
d) one or more non functionalized fluoropolymer as component D

The term "polyolefin" indicates a polymer for which at least 50 % by moles of its recurring units (based on the total recurring units of the polymer) are derived from at least one linear olefin.

As examples of linear olefins, mention may be made of linear α monoolefins containing 2 to 20, preferably 2 to 12, carbon atoms, such as ethylene, propylene, 1-butene, 1-pentene, 1-hexene, 1-heptene, 1-octene, 1 nonene, 1-decene, 1-undecene and 1-dodecene. Preferred linear α-mono-olefins are ethylene and propylene. The term "polyolefin", in the context of the present invention, encompasses both functionalized and non functionalized polyolefins.

The term "fluoropolymer" is understood to mean a polymer for which at least 40 % by moles of its recurring units (based on the total recurring units of the polymer) are derived from at least one fluoromonomer. The fluoropolymer may be a homopolymer ; it may also be a copolymer formed by several fluoromonomers with one another, or else a copolymer formed by one or more fluoromonomers with one or more non-fluorinated monomers. These copolymers may, in particular, be random copolymers, block copolymers or graft copolymers. The term "fluoropolymer", in the context of the present invention, encompasses both functionalized and non functionalized fluoropolymers.

The term "fluoromonomer" is understood to mean any monomer that comprises at least one fluorine atom ; it customarily comprises at least one ethylenic unsaturation. As examples of fluoromonomers, mention may be made of fluorinated vinyl monomers, The expression "fluorinated vinyl monomer" is understood to denote the monoethylenically-unsaturated fluorinated monomers that are aliphatic and that have one or more fluorine atoms. As examples of fluorinated vinyl monomers, mention may be made of vinyl monomers that are free of hydrogen atoms such as tetrafluoroethylene, hexafluoropropylene and chlorotrifluoroethylene, perfluorinated vinyl ethers monomers (PAVE) such as perfluoro methyl vinyl ether or perfluoropropyl vinyl ether, and partially hydrogenated fluorinated vinyl monomers such as vinyl fluoride, trifluoroethylene, 3,3,3-trifluoropropene and, with most particular mention, vinylidene fluoride.

The expression "non-fluorinated monomer" is understood to mean any monomer that is free of fluorine atoms ; it customarily comprises at least one ethylenic unsaturation. Examples of non-fluorinated monomers are : α-monoolefins such as, for example, ethylene and propylene; styrene and non-fluorinated styrene derivatives ; non-fluorinated chloromonomers such as, for example, vinyl chloride and vinylidene chloride ; non-fluorinated vinyl ethers ; non-fluorinated vinyl esters such as, for example, vinyl acetate ; (meth)acrylic esters, nitriles and amides such as acrylonitrile and acrylamide; anhydrides; unsaturated carboxylic acids (in acid or salt form), such as acrylic acid; sulfonic monomers such as vinyl sulfonic acid (in acid or salt form).

The term "functionalized" in the present invention, when referred to a polyolefin polymer or to a fluoropolymer, indicates a polymer which contains 0.05%-50% by moles (based on the total number of recurring units of the polymer and excluding functional groups which may be present as polymer chain terminals) of functional groups which are available to react with other functional groups within the composition. In the context of the present invention "functional groups" are defined as customary in chemistry as groups of atoms in a molecule which have distinctive chemical properties and which define the reactivity of that molecule.

As known to the skilled person in some cases polymers which are otherwise non functionalized contain functional groups as chain terminals. These functional groups may derive from the polymerization reaction and depend on the initiator and/or chain transfer agents which have been utilized. In functionalized polymers for use in the present invention, the functional groups are instead distributed along the polymer chain as in the case wherein such functional group derive from copolymerization with functionalized co monomers and/or from grafting functionalized species. Without being bound by theory it is believed that functional groups distributed along the polymer chain are more effective in compatibilizing the composition of the invention than functional groups positioned as chain terminals, due to a more intimate interconnection between the functionalized polyolefin and the functionalized fluoropolymer.

The amount of functional groups can be measured using NMR techniques, which also enable the skilled person to distinguish between functional groups inserted by grafting and/or copolymerization along the polymer backbone from functional groups present as polymer chain terminals. The two kind of functional groups can be distinguished by their different chemical nature or, in the case of chemically similar moieties, by the variation in NMR relaxation times.

Preferably functionalized fluoropolymers and functionalized polyolefins for use in the present invention comprise functional groups selected from carboxylic acid and their salts, anhydride, ester, hydroxyl, amide, amine/ammonium salts, aminophenols, carboimides, epoxy, Br, I, silane, siloxane, sulphonic and its salts, phosphonic and its salts, isocyanate, nitrile, oxazoline, lactame, C=C double bond. Most preferred functionalized fluoropolymers and functionalized polyolefins for use in the present invention comprise functional groups selected from carboxylic, hydroxyethylcarboxylate and epoxide.

In some preferred embodiments, the functionalized fluoropolymers used in the present invention contain 0.1%-50% , more preferably from 0.5 to 30%, even more preferably from 0.8 to 20% by moles of functional groups (based on the total recurring units of the polymer) excluding functional groups which may be present as polymer chain terminals.

In some preferred embodiments, the functionalized polyolefins used in the present invention contain 0.1%-50% , more preferably from 0.5 to 30%, even more preferably from 0.8 to 20% by moles of functional groups (based on the total recurring units of the polymer) excluding functional groups which may be present as polymer chain terminals.

A polymer which contains zero or anyway less than 0.05% by moles of functional groups, excluding functional groups which may be present as polymer chain terminals, in the context of the present invention is considered a non functionalized polymer.

Functionalized polymers in the present invention can be functionalized polyolefins or functionalized fluoropolymers which will be described below. Functionalization of a polymer can be obtained with any method known in the art. Typically functionalized polymers are obtained during polymerization by introducing functionalized monomers within the polymerization medium during the polymerization process, or after polymerization via a grafting process by which a non functionalized polymer is grafted with moieties carrying the functional groups. Both these methods to introduce functional groups are well known in the art for a large variety of polymers and a large variety of functional groups and will not be discussed in detail herein.

Suitable functionalized comonomers or compounds to be grafted onto the main polymer chain are for example the following:
i) compounds that contain at least one organic group having at least one terminal α-β-unsaturated carbon-carbon bond and at least one group chosen from acid and anhydride groups as functional group, as for example unsaturated monocarboxylic or dicarboxylic acids and their salts, and/or unsaturated monocarboxylic or dicarboxylic anhydrides. Specific examples are maleic anhydride, itaconic anhydride, citraconic anhydride, bicyclo-2,2,1-hept-2-ene-5,6-dicarboxylic anhydride or acid, acrylic acid, methacrylic acid, maleic acid, fumaric acid, itaconic acid, citraconic acid, crotonic acid, wherein all acids can be in acid or salt form.
ii) compounds that contain at least one organic group having at least one terminal α-β-unsaturated carbon-carbon bond as and at least one ester group as functional group such as are vinyl acetate, vinyl propionate, monomethyl maleate, dimethyl maleate, methyl acrylate, ethyl acrylate, n-propyl acrylate, n-butyl acrylate, isobutyl acrylate, amyl acrylate, hexyl acrylate, 2-ethylhexyl acrylate, methyl methacrylate, ethyl methacrylate, hydroxymethyl acrylate, hydroxyethylacrylate, n-propyl methacrylate, n-butyl methacrylate, amyl methacrylate, hexyl methacrylate, 2-ethylhexyl methacrylate, diethyl fumarate, dimethyl itaconate and diethyl citraconate.
iii) compounds that contain at least one organic group having at least one terminal α-β-unsaturated carbon-carbon bond as and at least one amide group as functional group such as acrylamide and methacrylamide.
iv) compounds that contain at least one organic group having at least one terminal α-β-unsaturated carbon-carbon bond as and at least one epoxy group as functional group such as allyl-glycidyl ether.
v) compounds that contain at least one organic group having at least one terminal α-β-unsaturated carbon-carbon bond as and at least one amino group as functional group such as allyl-amine.
vi) compounds that contain at least one organic group having at least one terminal α-β-unsaturated carbon-carbon bond as and at least one halogen group as functional group selected from bromine or iodine, which can react by radical mechanism.
vii) compounds that contain at least one organic group having at least one terminal α-β-unsaturated carbon-carbon bond as and at least one silane or alkoxysilane group as functional group; for example vinyltrimethylsilane, vinyltris-trimethylsiloxysilane, vinyltrimethoxysilane, vinyltriethoxysilane, vinyltriacetoxysilane
viii) compounds that contain at least one organic group having at least one terminal α-β-unsaturated carbon-carbon bond as and at least one sulphonic or phosphonic group as vinylsulfonic acid or vinylphosphonic acid, including their salts.

Polymers suitable to be used as non functionalized polyolefins in the present invention are polyolefins, as defined above, having at least 50%, preferably at least 60 % by moles, particularly preferably at least 70 % by moles, most preferably at least 80 % by moles of their recurring units (based on the total recurring units of the polymer) derived from at least one linear olefin and including less than 0.05% (preferably 0%) by moles (based on the total recurring units of the polyolefin and) of functional groups, excluding functional groups which may be present as polymer chain terminals.

The non functionalized polyolefin may be chosen, in particular, from homopolymers of the aforementioned olefins or from copolymers of these olefins, in particular copolymers of ethylene and propylene, with one another or with one or more comonomers.

The comonomers if present can be preferably chosen from
- the linear α-monoolefins described above ;
- branched α-monoolefins containing 4 to 12 carbon atoms such as 3 methylbutene, 4-methylpentene and 5-methylhexene ;
- from aryl vinyl monomers such as styrene type monomers;
- from conjugated dienes such as butadiene, isoprene and 1,3-pentadiene
- f rom non-conjugated dienes such as 1,4-pentadiene, 7-methyl-1,6-octadiene, 5-ethylidene-2-norbornene and bicyclo[2.2.1]oct-2,5-diene.

The non functionalized polyolefin may comprise blends of different polyolefins as described above.

A functionalized polyolefin suitable for the present invention can be selected from the polyolefins having the general structure as described for the non functionalized polyolefins (including preferred options) with the only difference that an amount of functional groups is introduced in the molecule. Functional groups can be introduced in the molecule using any method known in the art. For example an amount of a monomer carrying the functional group can be added during polymerization so to form a copolymer including functionalized monomers in the polymeric chain, or, alternatively, a monomer carrying the functional group can be grafted onto the polymer chain using conventional polymer grafting procedures (see for example EP-A-0650987.

Preferred functionalized polyolefins are selected from polymers having at least 50% by moles, based on the total amount of recurring units of the polymer, of recurring units derived from at least one linear olefin also comprising 0.1%-50% by moles, based on the total amount of recurring units of the polymer, of functional groups excluding functional groups which may be present as polymer chain terminals.

Examples of functionalized polyolefins are co-polymers of ethylene, propylene or mixtures thereof with acrylic acid, acrylates, glycidyl(meth)acrylate, vinyl acetate, and polymers of ethylene, propylene or mixtures thereof grafted with acrylic acid, acrylates, glycidyl(meth)acrylate, vinyl acetate.

A non-functionalized fluoropolymer for use in the present invention is any fluoropolymer as defined above, having at least 40%, preferably at least 50 % by moles, particularly preferably at least 60 % by moles, most preferably at least 70 % by moles of their recurring units (based on the total recurring units of the polymer) derived from one or more fluoromonomers, and comprising less than 0.05% (preferably 0%) by moles (based on the total recurring units of the fluoropolymer) of functional groups excluding functional groups which may be present as polymer chain terminals. As examples of non functionalized fluoropolymers suitable for the present invention, mention may especially be made of the homopolymers of vinylidene fluoride, vinyl fluoride, trifluoroethylene or chlorotrifluoroethylene, and the copolymers that these fluoromonomers form with one another or with at least one other fluoromonomer as defined above (including a fluoromonomer that does not contain hydrogen atoms, such as tetrafluoroethylene , hexafluoropropylene, perfluorovinylethers or perfluoroalkyloxyvinylethers). As examples of such copolymers and terpolymers, mention may be made of the copolymers and terpolymers of vinylidene fluoride and the copolymers and terpolymers of chlorotrifluoroethylene with at least one other fluoromonomer as defined above (including a fluoromonomer that does not contain hydrogen atoms, such as tetrafluoroethylene hexafluoropropylene, perfluorovinylethers or perfluoroalkyloxyvinylethers). Mention may also be made of the copolymers and terpolymers of at least one of the fluoromonomers mentioned above with at least one non-fluorinated monomer.

The non functionalized fluoropolymer in the compositions according to the invention is preferably chosen from vinylidene fluoride polymers.

For the purposes of the present invention, a vinylidene fluoride polymer is a fluoropolymer comprising at least 50 % by moles (based on the total number of recurring units of the polymer) of recurring units derived from vinylidene fluoride.

As examples of vinylidene fluoride polymers, mention may especially be made of homopolymers of vinylidene fluoride, and copolymers thereof with other ethylenically unsaturated monomers, whether they are fluorinated or non-fluorinated.

Preferred vinylidene fluoride polymers for use the present invention are those wherein at least 60%, more preferably at least 70%, even more preferably at least 80% by moles of the recurring units (based on the total number of recurring units of the polymer) derived from vinylidene fluoride. Preferred comonomers, if present are hexafluoropropylene, trifluoroethylene and chlorotrifluoroethylene.

A functionalized fluoropolymer suitable for the present invention can be selected from the fluoropolymers having the general structure as described for the non functionalized fluoropolymers (including preferred options) with the only difference that an amount of functional groups is introduced in the molecule. Functional groups can be introduced in the molecule using any method known in the art. For example an amount of a monomer carrying the functional group can be added during polymerization so to form a co-polymer including functionalized monomers in the polymeric chain, or, alternatively, a monomer carrying the functional group can be grafted onto the polymer chain using conventional polymer grafting procedures (see for example EP-A-0650987.

Preferred functionalized fluoropolymers are selected from vinylidene fluoride polymers comprising at least 50% by moles of recurring units derived from vinylidene fluoride, and 0.1%-50% by moles, based on the total amount of recurring units of the polymer, of functional groups excluding functional groups which may be present as polymer chain terminals.

Examples of suitable functionalized fluoropolymers are vinylidene fluoride copolymers with acrylic acid (or its salts), acrylate esters, hydroxymethylacrylate, hydroxyethyl acrylate, maleic anhydride, monomers containing silane groups, glycidyl(meth)acrylate, monomers containing a sulphonic group such as e.g. vinylsulphonic acid in acid or salt form, monomers containing a labile halogen mojety (selected from Br and I), monomers containing an amine group, vinylidene fluoride homo or copolymers grafted with the same compounds mentioned above as possible comonomers.

Thermoplastic polymeric compositions according to the present invention comprise a functionalized portion (components A and B) and a non functionalized portion (components C and D). It is essential for the invention to work as expected that the functionalized portion represents 1-50% by weight of the total amount of the components A, B, C and D. An amount of components A and B which is lower than 1% by weight is not sufficient to compatibilize components C and D which are in general not miscible, and as a consequence the adhesive properties of the mixture are poor on polyolefin surfaces or on fluoropolymer surfaces, and the mechanical properties of the mixture are degraded.

An amount of components A and B which is higher than 50% by weight is not advisable because for that composition the adhesion of the composition to fluoropolymers and polyolefins is decreased and its processability is poorer. Also, in general, functionalized polymers are more complex to make and more expensive than non functionalized polymers, so that it is desirable to use them in the minimum amount required for the invention to work effectively. Preferably the functionalized portion A+B represents 1-50%, more preferably 2-40%, even more preferably 3-30%, most preferably 4-13% by weight of the total amount of the components A, B, C and D.

Another essential feature of the invention is that components A and B must be present in the thermoplastic polymeric composition of the invention in a selected weight ratio A:B of from 1:1.2 to 1:10, preferably from 1:1.5 to 1:6, more preferably from 1:1.75 to 1:4.

The amount of functional groups which is present in the functionalized polymers of the present invention is also relevant. In general it can be said that in case functionalized polymers with an amount of functional groups per mole in the low part of the range are used, the amount used is preferably in the higher part of the range and vice versa.

In general it is preferred that the ratio between the total amount of functional groups (in moles) provided by component A to the total amount of functional groups (in moles) provided by component B is between 1:4 and 4:1, more preferably between 3:1 and 1:3.

It is also essential for the invention to work as expected that the non functionalized portion, i.e. the total amount of components C and D represents 50-99%, preferably 60-99%, more preferably 70-99%, even more preferably 80-99%, most preferably 87-99% by weight of the total amount of components A, B, C and D. Another essential feature of the present invention is that the weight ratio between components C and D is from 1:1.2 to 1:5, preferably from 1:1.3 to 1:4, more preferably from 1:1.6 to 1:3.5.

The required ratios between component A and B and components C and D are essential to provide a composition with the desired properties which combines low cost, easy manufacturing and processability (low viscosity of the melt, low residues/fouling of the extruder), good mechanical properties and good adhesion on a variety of surfaces including in particular polyolefin surfaces and fluoropolymer surfaces.

The basic principle underlying the present invention is that the functionalized components A and B must interact with each other via a chemical reaction driven by their functional groups so to form a combined phase which allows the mixing of the non functionalized components C and D which would otherwise be non miscible. The resulting composition is surprisingly easy to prepare via extrusion, is stable, and is extremely efficient in adhering to both fluoropolymer and polyolefin based surfaces.

The one or more functionalized polyolefin (component A) comprise functional groups X. The one or more functionalized fluoropolymers (component B) comprise functional groups Y.

The interaction between components A and B can occur directly, or indirectly. In one embodiment functional groups X and Y are reactive with each other, in this case the presence of additional components is not necessary.

In another embodiment functional groups X and Y are not reactive with each other. In this embodiment the thermoplastic polymeric composition of the invention must include an additional component (E).

Component (E) consists of one or more reactive compatibilizer compounds. A reactive compatibilizer compound is a chemical compound comprising, for each molecule, at least one free functional group which is reactive with functional groups X and one free functional group which is reactive with functional groups Y. The amount of component E, if required, is typically from 0.1 to 90%, preferably from 0.5 to 75%, more preferably from 1 to 50%, most preferably from 3 to 30% by weight based on the total weight of the components A and B.

Preferably said reactive compatibilizer, when present, is not a polymeric material, although it can be an oligomer, in general it is preferred that its molecular weight is below 10000 Dalton, preferably below 2000 Dalton. Suitable reactive compatibilizers for use in component E of the present invention are for example:
polycarboxilic acids and their salts such as adipic acid, polyalcohols such as glycols, polyglicidylethers (DGEBA), Polyamines (Jeffamines); allylesthers (TAIC); multi-olefins (bisolefin).

Further examples of chemical compounds which can be used as component E in the present invention are amino cyclohexanol, p-amino benzoic acid, ethylene diamine, propylene diamine, 1,4 butane diamine, 1,5 pentane diamine, oxalic acid, malonic acid, succinic acid, glutaric acid, adipic acid, an isocyanate having the formula R(NCO)m wherein n is an integer from about 2 to 4, or a diol having from 2 to about 20 carbon atoms optionally having ether linkages.

Functional groups, for the purpose of the present invention, are considered to be reactive with each other if they can give rise to chemical reactions during melt processing of the thermoplastic composition of the invention e.g. of additions/substitution (e.g. amidation, imidation, esterification, concerted additions, urea formation, urethane formation), interchange reactions (e.g. aminolysis, ester interchange, transesterification, amide-ester exchange), ring opening reactions (e.g. epoxide ring, oxazoline ring, lactam ring) or ionic bonding reactions (e.g. pyridine/amine, or vitrimer formation).

Examples of reactive couples among functional groups are the following:
- carboxylic - amine
- carboxylic - epoxide
- carboxylic - oxazoline
- carboxylic - carbodiimide
- carboxylic - hydroxyl
- epoxide - hydroxyl
- maleic anhydride - amine
- maleic anhydride - hydroxyl
- maleic anhydride - C=C double bond
- maleate - C=C double bond
- ester - amine
- ester - amide
- ester - ester
- ester - hydroxyl
- oxazoline - phenol
- lactam - amine
- isocyanate - hydroxyl
- amine - hydroxyl
- amine - halide selected from Br, I
- amine - epoxide
- silane - silane
- silane - hydroxyl/halide
- siloxanes - siloxanes
- siloxanes - hydroxyl
- siloxanes - halide selected from Br, I
- epoxide - epoxide
- nitrile - nitrile
- nitrile - aminophenols
- carboxylic - carboxylic in presence of divalent cations
- carboxylate - carboxylate in presence of divalent cations
- acrylate - acrylate in presence of divalent cations
- acrylate - acrylate
- carboxylic - acrylate in presence of divalent cations
- C=C double bond - halide (selected from Br,
- C=C double bond - radical
- radical - radical

To note, in the present application and specifically in the list above, when mentioning functional groups which have acid or basic properties, the mention of the acid/basic form intends to encompass the salt form e.g. carboxylic includes carboxylate, amine includes ammonium salt etc.

Preferably in the present invention wherein groups X and Y are reactive with each other they selected from one or more of the reactive couples listed above. Also preferably wherein groups X and Y are reactive with each other and a reactive compatibilizer E is present such reactive compatibilizer E comprises two functional groups, one who is able to form one of the reactive couples defined in the description with functional groups X and the other who is able to form one of the reactive couples defined in the description with functional groups Y.

In addition to components A, B, C, D and , if required, E, the thermoplastic polymeric compositions of the present invention may include one or more customary additives for thermoplastic polymers such as organic or mineral colorants, fillers, stabilizers, anti oxidants, acid scavengers, plasticizers, lubricants, tackifiers. Also it may include chemical compounds which act as catalysts to increase the reaction kinetic of the functional groups of the functionalized polymers A and B among them and/or with the reactive compatbilizer E if present.

In order to preserve the properties of the composition of the invention, it is preferred that the combined amount of all the additives mentioned above, not being part of the essential components of the invention A-E, is less than 30%, preferably less than 10% even more preferably less than 5% by weight based on the total weight of the composition. It is also preferred that the total amount of components A, B, C, d and E if present represents at least 70%, preferably 90%, more preferably 95% by weight of the total weight of the composition.

The thermoplastic polymeric compositions of the present invention can be prepared by mixing the essential components A-E and optional additives using any method available to the skilled person. Typically the compositions of the invention can be prepared via melt processing e.g. in an extruder. The term "extruder" is understood to mean a continuous device comprising at least one feed zone and, at its outlet, a discharge zone preceded by a compression zone, the latter forcing the molten mass to pass through the discharge zone. The discharge zone may additionally be followed by a granulating device or by a device that gives the extruded material its final shape. Advantageously, use is made of known extruders based on the work of a single screw (including Buss extruders) or of two screws which, in the latter case, may cooperate in a corotating or counterrotating manner (same direction of rotation or opposite directions of rotation).

The starting materials for obtaining the polymeric composition of the invention from components A, B, C and D can be selected from individual polymers or pre-prepared polymeric compositions in solid form, preferably in divided form such as pellets, granules or powders. For example the individual components A, B, C, D in divided form are loaded into a twin screw extruder, melted at a temperature above the highest melting temperature, thoroughly mixed so to form a uniform melted polymeric composition, extruded, preferably trough one or more capillary dies, cooled and turned into a divided form such as pellets, granules or powders of the polymeric compositions of the invention, for subsequent use, or directly extruded into finished articles such as films or pipes. Component E, if present, can be simply mixed with the other components within the extruder.

The thermoplastic polymeric composition of the invention finds application in particular in the construction of multilayer structures wherein one of the layers is composed of the polymer composition of the invention.

Multilayer structures contain at least one other layer which may be composed of various, both inorganic and organic, materials. As inorganic materials that may be incorporated into the composition of this other layer, mention may be made of metals and metal alloys, such as aluminum and steel for example. As organic materials that may be incorporated into the composition of this other layer, mention may be made of thermoplastic polymers. Examples of thermoplastic polymers that may be incorporated into the composition of this other layer are fluoropolymer layers and the polyolefin layers.

When used in articles such as multilayer structures, the composition of the present invention can be used as is or blended with reinforcing materials such as fillers, fibers or fabrics, to increase its mechanical resistance.

In general in all multilayer structures all layers can contain fillers and/or fibers and/or fabrics in blend with the thermoplastic polymers.

In particular the composition of the invention can find application in three-layer structure, for which the central layer is composed of the composition of the invention (optionally blended with fillers and/or fibers) and for which top and bottom layers comprise thermoplastic polymers, as defined above.

In particular the composition of the invention can be used as adhesive to facilitate adhesion between a material comprising one or more fluoropolymers and a material comprising one or more polyolefin.

Preferred multilayer structures are three-layer structures for which the central layer is composed of the polymeric composition of the invention, optionally blended with fillers and/or fibers and/or fabrics, one of the top or bottom layers contains of one or more polyolefin polymers, and the other contains one or more fluoropolymers.

These multilayer structures may be produced according to any process that is known for this purpose and is compatible with the nature of the constituent material of each layer. The assembling of the layers may be carried out, for example, by bonding or by hot press molding of the constituent layers to one another, by coating of a solid layer with a powder or a solution of the constituent material of the other layer(s); or else, in particular in the case where the constituent materials of the layers are all thermoplastics, by coextrusion, by coextrusion-blow moulding, and by coinjection moulding.

Coextrusion is particularly suitable for the production of multilayer structures having a three layers configuration as described above. In particular for structures wherein the central layer contains the polymeric composition of the invention, one of the top or bottom layers contains one or more homopolymers or copolymers derived from ethylene and/or propylene, and the other contains one or more fluoropolymers such as homopolymers or copolymers derived from vinylidene fluoride. This coextrusion may be carried out, for example, in three extruders, preferably three single-screw extruders, feeding a die via a feed-block or preferably feeding three-layer tubular dies in the head which builds the final single pipe.

The multilayer structures thus produced may be manufactured in the final form of sheets and films. The multilayer structures thus produced may also be manufactured in the final form of hollow bodies such as pipes, hoses, flexible risers, cable coatings and so on.

The composition of the present invention finds in particular application in the manufacture of pipes, tanks, containers and receptacles for the transport and storage of gas or liquids, such as water or hydrocarbons, in particular oils and fuels.

In fact polyolefin pipes which are widely used due to their low cost and good mechanical properties, are relatively permeable to hydrocarbons. For this reason a barrier layer made of fluoropolymers such as VDF polymers is desirably present as an internal layer of the pipe, directly in contact with the hydrocarbons. Such internal fluoropolymer layer however does not adhere well to the polyolefin layer due to the incompatibility of the materials. The introduction on an intermediate layer made of the thermoplastic polymeric composition of the invention efficiently solves that problem adhering to both the fluoropolymer layer and the polyolefin layer.

### Experimental Section

The invention will be now described in more detail in connection with the following examples, whose purpose is merely illustrative and not intended to limit the scope of the invention.

### Raw materials

**Functionalized polyolefin** (component A): Lotader^{®} AX8840 is an ethylene copolymer containing 8% by weight of glycidyl methacrylate obtainable from SK functional polymer, in pellets form.

**Functionalized fluoropolymer** (component B): VDF copolymer containing 99% by moles VDF and 1% by moles of acrylic acid monomers having Melt Index of 6 g/min (213°C/2.16 Kg), and melting point of 168°C in powder form, obtained from Solvay Specialty Polymers indicate from now on as "POLYMER FF".

**Non Functionalized polyolefin** (component C): Lupolen^{®} 4261AG, high molecular weight high density polyethylene from Lyondell Basell.

**Non Functionalized fluoropolymer** (component D): Solef^{®} 6012 VDF homopolymers from Solvay Specialty polymers.

### Preparation of the thermoplastic composition

The blends were prepared feeding at the main gate of a ZSK 26Mc18 Coperion twin screw extruder (L/D=48) the four component resins.

The following temperature profile was used (see Table 1 below):

**Table 1 (Extruder Temperature profile)**

| **Section** | **T°C** |
|---|---|
| 1 (main gate) | 140 |
| 2 | 210 |
| 3 | 210 |
| 4 | 210 |
| 5 | 220 |
| 6 | 220 |
| 7 | 220 |
| 8 | 220 |
| 9 | 220 |
| 10 | 230 |
| 11 | 240 |
| 12 | 250 |
| 13 (Die) | 250 |

The composition was then extruded trough a die having two holes of 3mm diameter. The extrudate was cooled in water bath and granulated.

### Measurement of Adhesion

1 mm thick compression molded sheets from the thermoplastic compositions described above were prepared using a Carver auto Series plus press. After preheating at 230°C the polymer was pressed at 16 tons for 1 minute and afterwards cooled under pressure by cold water; during the molding thin Kapton films were put in direct contact with the blend in order to avoid its adhesion to metal plates.

In order to estimate the adhesion of the thermoplastic composition to PVDF and PE, a three layer construction was built from the 1mm thick sheet and sandwiching it between same sized samples from one sheet of polyolefin (Lupolen^{®} 4261AG from Lyondell Basell) and one sheet of fluoropolymer (Solef^{®} 6008 PVDF from Solvay Specialty Polymers) and overmolding the sandwich at 230°C / 4 bar.

Stripes 15mm x 130mm were cut from the three layer construction and the adhesion was evaluated by performing 90° peel-off tests with a crosshead speed equal to 300mm/min, using a universal Instron 5500 dynamometer; the average peeling strength was reported as the peeling force normalized by the width of the stripe and it's expressed in N/cm.

The following thermoplastic compositions according to the invention were prepared as described:

### Example 1

The components A, B, C and D were melted, mixed and extruded with a screw speed equal to 60rpm and setting a total output of 5kg/h.
Component A: 340g of Lotader^{®}AX8840,
Component B: 660g of POLYMER FF
Component C: 1020g of Lupolen^{®} 4261AG
Component D: 1980g of Solef^{®}6012

The total amount of components A and B is 25% by weight, the total amount of components C and D is 75% by weight based on the total weight of the composition. The weight ratio between components A and B is 1:1.9, the weight ratio between components C and D is 1:1.9.

### Example 2

The components A, B, C and D were melted, mixed and extruded as in Example 1.
Component A: 255g of Lotader^{®}AX8840,
Component B: 495g of POLYMER FF
Component C: 525g of Lupolen^{®} 4261AG
Component D: 1725g of Solef^{®}6012

The total amount of components A and B is 25% by weight, the total amount of components C and D is 75% by weight based on the total weight of the composition. The weight ratio between components A and B is 1:1.9, the weight ratio between components C and D is 1:3.3.

### Example 3

The components A, B, C and D were melted, mixed and extruded with a screw speed equal to 100rpm and setting a total output of 15kg/h.
Component A: 232g of Lotader^{®} AX8840,
Component B: 448g of POLYMER FF
Component C: 1208g of Lupolen^{®} 4261AG
Component D: 2112g of Solef^{®} 6012

The total amount of components A and B is 17% by weight, the total amount of components C and D is 83% by weight based on the total weight of the composition. The weight ratio between components A and B is 1:1.9, the weight ratio between components C and D is 1:1.7.

### Example 4

The components A, B, C and D were melted, mixed and extruded as in Example 5.
Component A: 136g of Lotader^{®}AX8840,
Component B: 264g of POLYMER FF
Component C: 1304g of Lupolen^{®} 4261AG
Component D: 2296g of Solef^{®}6012

The total amount of components A and B is 10% by weight, the total amount of components C and D is 90% by weight based on the total weight of the composition. The weight ratio between components A and B is 1:1.9, the weight ratio between components C and D is 1:1.8.

### Example 1c

The components A, B, C and D were melted, mixed and extruded as in Example 1.
Component A: 255g of Lotader^{®}AX8840,
Component B: 495g of POLYMER FF
Component C: 1065g of Lupolen^{®} 4261AG
Component D: 1185g of Solef^{®}6012

The total amount of components A and B is 25% by weight, the total amount of components C and D is 75% by weight based on the total weight of the composition. The weight ratio between components A and B is 1:1.9, the weight ratio between components C and D is 1:1.1.

### Example 2c

The components A, B, C and D were melted, mixed and extruded as in Example 1.
Component A: 255g of Lotader^{®}AX8840,
Component B: 495g of POLYMER FF
Component C: 285g of Lupolen^{®} 4261AG
Component D: 1965g of Solef^{®}6012

The total amount of components A and B is 25% by weight, the total amount of components C and D is 75% by weight based on the total weight of the composition. The weight ratio between components A and B is 1:1.9, the weight ratio between components C and D is 1:6.8.

Adhesion to PVDF and to HDPE was measured as described above. Results are shown in Table 2 and show that examples of thermoplastic composition according to the invention offer good adhesion on both fluoropolymers and polyolefin surfaces.

**Table 2 - Adhesion test results**

| | Peeling strength in N/cm | |
|---|---|---|
| Peeling strength in N/cm | On Solef^{®} 6008 | On Lupolen^{®} HDPE |
| Ex. 1 | >70 | 50 |
| Ex. 2 | >60 | 28 |
| Ex. 3 | >90 | 56 |
| Ex. 4 | >80 | 62 |
| Ex. 1c | 0 | n.a. |
| Ex. 2c | n.a. | 0 |

| | | |
|---|---|---|
| n.a.= not available Data expressed as >x indicates that the sample had a mechanical failure when the instrument reached the peeling strength "x", meaning that the actual interlayer adhesion could not be precisely measured but is certainly higher than the indicated value "x". | | |

## Claims

1. A thermoplastic polymeric composition comprising:
a) one or more functionalized polyolefin as component A
b) one or more functionalized fluoropolymer as component B
c) one or more non functionalized polyolefin as component C
d) one or more non functionalized fluoropolymer as component D
wherein,
- the total amount of components A and B is 1-50% by weight of the total amount of components A, B, C and D,
- the total amount of components C and D is 50-99% by weight of the total amount of components A, B, C and D,
- the weight ratio between components A and B is from 1:1.2 to 1:10,
- the weight ratio between components C and D is from 1:1.2 to 1:5
- said one or more functionalized polyolefin (A) comprising functional groups X and said one or more functionalized fluoropolymer (B) comprising functional groups Y, and
- one of the following conditions i) or ii) is satisfied:
i) said functional groups X and Y are reactive with each other
ii) said functional groups are non reactive with each other and said thermoplastic polymeric composition comprises an additional component (E) said component (E) consisting of one or more reactive compatibilizer compounds, said reactive compatibilizer compounds comprising at least one free functional group which is reactive with functional group X and one free functional groups which is reactive with functional group Y for each molecule of said reactive compatibilizer compound.
wherein said non functionalized fluoropolymer is selected from vinylidene fluoride polymers comprising at least 50% by moles of recurring units derived from vinylidene fluoride, and wherein said functionalized fluoropolymer is selected from vinylidene fluoride polymers comprising at least 50% by moles of recurring units derived from vinylidene fluoride, said functionalized fluoropolymers also comprising 0.1%-50% by moles, based on the total amount of recurring units of the polymer, of functional groups Y.

2. A thermoplastic polymeric composition according to any preceding claim wherein said non functionalized polyolefin is selected from polymers having at least 50% by moles, based on the total amount of recurring units of the polymer, of recurring units derived from at least one linear olefin.

3. A thermoplastic polymeric composition according to any preceding claim wherein said functionalized polyolefin is selected from polymers having at least 50% by moles, based on the total amount of recurring units of the polymer, of recurring units derived from at least one linear olefin also comprising 0.1%-50% by moles, based on the total amount of recurring units of the polymer, of functional groups Y.

4. A thermoplastic polymeric composition according to any preceding claim wherein said functional groups X and Y are selected from carboxylic acid and their salts, anhydride, ester, hydroxyl, amide, amine/ammonium salts, aminophenols, carboimides, epoxy, Br, I, silane, siloxane, sulphonic and its salts, phosphonic and its salts, isocyanate, nitrile, oxazoline, lactame, C=C double bond.

5. A thermoplastic polymeric composition according to any preceding claim wherein said functional groups X and Y are reactive with each other.

6. A thermoplastic polymeric composition according to claims 1-4 wherein said functional groups X and Y are not reactive with each other and the additional component E comprises two functional groups, one who is reactive with functional groups X and the other who is reactive with functional groups Y.

7. A process for making a thermoplastic polymeric composition according to claims 1-6 said process comprising the steps of
- providing components A, B, C, D and, if necessary, E
- introducing said components in an extruder thereby forming an homogenous mixture,
- extruding said homogenous mixture

8. The use of a thermoplastic composition according to claims 1-6 as an adhesive.

9. A multilayer article wherein at least one layer comprises a thermoplastic polymeric composition according to claims 1-6.

10. A multilayer article according to claim 9 which is selected from a tube, a pipe or a sheet.

11. Use of a pipe according to claim 10 to transport gases or liquids, preferably oil.

## Patentansprüche

1. Thermoplastische Polymerzusammensetzung umfassend:
a) ein oder mehrere funktionalisierte Polyolefine als Komponente A
b) ein oder mehrere funktionalisierte Fluorpolymere als Komponente B
c) ein oder mehrere nichtfunktionalisierte Polyolefin als Komponente C
d) ein oder mehrere nichtfunktionalisierte Fluorpolymere als Komponente D
wobei,
- die Gesamtmenge der Komponenten A und B 1-50 Gew.-% der Gesamtmenge der Komponenten A, B, C und D beträgt;
- die Gesamtmenge der Komponenten C und D 50-99 Gew.-% der Gesamtmenge der Komponenten A, B, C und D beträgt;
- das Gewichtsverhältnis zwischen den Komponenten A und B von 1:1,2 bis 1:10 beträgt;
- das Gewichtsverhältnis zwischen den Komponenten C und D von 1:1,2 bis 1:5 beträgt;
- das eine oder die mehreren funktionalisierten Polyolefine (A) funktionelle Gruppen X umfassen und das eine oder die mehreren funktionalisierten Fluorpolymere (B) funktionelle Gruppen Y umfassen, und
- eine der folgenden Bedingungen i) und ii) erfüllt ist:
i) die funktionellen Gruppen X und Y sind miteinander reaktiv,
ii) die funktionellen Gruppen sind nicht miteinander reaktiv und die thermoplastische Polymerzusammensetzung umfasst eine zusätzliche Komponente (E), wobei die Komponente (E) aus einer oder mehreren reaktiven Kompatibilisatorverbindungen besteht, wobei die reaktiven Kompatibilisatorverbindungen wenigstens eine freie funktionelle Gruppe, die mit der funktionellen Gruppe X reaktiv ist, und eine freie funktionelle Gruppe, die mit der funktionellen Gruppe Y reaktiv ist, für jedes Molekül der reaktiven Kompatibilisatorverbindung umfassen,
wobei das nichtfunktionalisierte Fluorpolymer ausgewählt ist aus Vinylidenfluorid-Polymeren, die wenigstens 50 Mol-% an von Vinylidenfluorid abgeleiteten Wiederholungseinheiten umfassen, und wobei das funktionalisierte Fluorpolymer ausgewählt ist aus Vinylidenfluorid-Polymeren, die wenigstens 50 Mol-% an von Vinylidenfluorid abgeleiteten Wiederholungseinheiten umfassen, wobei die funktionalisierten Fluorpolymere auch 0,1 bis 50 Mol-%, bezogen auf die Gesamtmenge von Wiederholungseinheiten des Polymers, an funktionellen Gruppen Y umfassen.

2. Thermoplastische Polymerzusammensetzung nach einem der vorstehenden Ansprüche, wobei das nichtfunktionalisierte Polyolefin ausgewählt ist aus Polymeren mit wenigstens 50 Mol-%, bezogen auf die Gesamtmenge an Wiederholungseinheiten des Polymers, an Wiederholungseinheiten, die von wenigstens einem linearen Olefin abgeleitet sind.

3. Thermoplastische Polymerzusammensetzung nach einem der vorstehenden Ansprüche, wobei das funktionalisierte Polyolefin ausgewählt ist aus Polymeren mit wenigstens 50 Mol-%, bezogen auf die Gesamtmenge an Wiederholungseinheiten des Polymers, an Wiederholungseinheiten, die von wenigstens einem linearen Olefin abgeleitet sind, und ferner 0,1 bis 50 Mol-%, bezogen auf die Gesamtmenge an Wiederholungseinheiten des Polymers, an funktionellen Gruppen Y umfassen.

4. Thermoplastische Polymerzusammensetzung nach einem der vorstehenden Ansprüche, wobei die funktionellen Gruppen X und Y ausgewählt sind aus Carbonsäure und ihren Salzen, Anhydrid, Ester, Hydroxy, Amid, Amin/Ammoniumsalzen, Aminophenolen, Carboimiden, Epoxy, Br, I, Silan, Siloxan, Sulfon und seinen Salzen, Phosphon und seinen Salzen, Isocyanat, Nitril, Oxazolin, Lactam, C=C-Doppelbindung.

5. Thermoplastische Polymerzusammensetzung nach einem der vorstehenden Ansprüche, wobei die funktionellen Gruppen X und Y miteinander reaktiv sind.

6. Thermoplastische Polymerzusammensetzung nach Ansprüchen 1-4, wobei die funktionellen Gruppen X und Y nicht miteinander reaktiv sind und die zusätzliche Komponente E zwei funktionelle Gruppen umfasst, von denen eine mit funktionellen Gruppen X reaktiv ist und die andere mit funktionellen Gruppen Y reaktiv ist.

7. Verfahren zur Herstellung einer thermoplastischen Polymerzusammensetzung nach Ansprüchen 1-6, wobei das Verfahren die Schritte umfasst
- Bereitstellen von Komponenten A, B, C, D und, falls erforderlich, E
- Einführen der Komponenten in einen Extruder, um ein homogens Gemisch zu bilden,
- Extrudieren des homogenen Gemischs.

8. Verwendung einer thermoplastischen Zusammensetzung nach Ansprüchen 1-6 als Klebstoff.

9. Mehrschichtiger Gegenstand, wobei wenigstens eine Schicht eine thermoplastische Polymerzusammensetzung nach Ansprüchen 1-6 umfasst.

10. Mehrschichtiger Gegenstand nach Anspruch 9, der ausgewählt ist aus einem Schlauch, einem Rohr oder einer Folie.

11. Verwendung eines Rohrs nach Anspruch 10 zum Befördern von Gasen oder Flüssigkeiten, vorzugsweise Öl.

## Revendications

1. Composition polymérique thermoplastique comprenant :
a) une ou plusieurs polyoléfines fonctionnalisées comme composant A
b) un ou plusieurs polymères fluorés fonctionnalisés comme composant B
c) une ou plusieurs polyoléfines non fonctionnalisées comme composant C
d) un ou plusieurs polymères fluorés non fonctionnalisés comme composant D
dans laquelle
- la quantité totale des composants A et B correspond à 1 à 50 % en poids de la quantité totale des composants A, B, C et D,
- la quantité totale des composants C et D correspond à 50 à 99 % en poids de la quantité totale des composants A, B, C et D,
- le rapport en poids entre les composants A et B est de 1:1,2 à 1:10,
- le rapport en poids entre les composants C et D est de 1:1,2 à 1:5,
- ladite ou lesdites polyoléfines fonctionnalisées (A) comprenant des groupements fonctionnels X et ledit ou lesdits polymères fluorés fonctionnalisés (B) comprenant des groupements fonctionnels Y, et
- l'une des conditions i) ou ii) suivantes est vérifiée :
i) lesdits groupes fonctionnels X et Y sont réactifs l'un avec l'autre
ii) lesdits groupes fonctionnels ne sont pas réactifs l'un avec l'autre et ladite composition polymérique thermoplastique comprend un composant supplémentaire (E), ledit composant (E) étant constitué d'un ou de plusieurs composés compatibilisants réactifs, lesdits composés compatibilisants réactifs comprenant au moins un groupe fonctionnel libre qui est réactif avec le groupe fonctionnel X et un groupe fonctionnel libre qui est réactif avec le groupe fonctionnel Y pour chaque molécule dudit composé compatibilisant réactif,
dans laquelle ledit polymère fluoré non fonctionnalisé est choisi parmi des polymères de fluorure de vinylidène comprenant au moins 50 % en moles de motifs répétitifs dérivés du fluorure de vinylidène, et dans laquelle ledit polymère fluoré fonctionnalisé est choisi parmi des polymères de fluorure de vinylidène comprenant au moins 50 % en moles de motifs répétitifs dérivés du fluorure de vinylidène, lesdits polymères fluorés fonctionnalisés comprenant en outre 0,1 % à 50 % en moles, par rapport à la quantité totale de motifs répétitifs du polymère, de groupes fonctionnels Y.

2. Composition polymérique thermoplastique selon l'une quelconque des revendications précédentes, dans laquelle ladite polyoléfine non fonctionnalisée est choisie parmi les polymères ayant au moins 50 % en moles, par rapport à la quantité totale de motifs répétitifs du polymère, de motifs répétitifs dérivés d'au moins une oléfine linéaire.

3. Composition polymérique thermoplastique selon l'une quelconque des revendications précédentes, dans laquelle ladite polyoléfine fonctionnalisée est choisie parmi les polymères ayant au moins 50 % en moles, par rapport à la quantité totale de motifs répétitifs du polymère, de motifs répétitifs dérivés d'au moins une oléfine linéaire comprenant également 0,1 % à 50 % en moles, par rapport à la quantité totale de motifs répétitifs du polymère, de groupes fonctionnels Y.

4. Composition polymérique thermoplastique selon l'une quelconque des revendications précédentes, dans laquelle lesdits groupes fonctionnels X et Y sont choisis parmi l'acide carboxylique et leurs sels, l'anhydride, l'ester, l'hydroxyle, l'amide, l' amine/ les sels d'ammonium, les aminophénols, les carboimides, l'époxy, Br, I, le silane, le siloxane, le sulfonique et ses sels, le phosphonique et ses sels, l'isocyanate, le nitrile, l'oxazoline, le lactame et la double liaison C=C.

5. Composition polymérique thermoplastique selon l'une quelconque des revendications précédentes, dans laquelle lesdits groupes fonctionnels X et Y sont réactifs l'un avec l'autre.

6. Composition polymérique thermoplastique selon les revendications 1 à 4, dans laquelle lesdits groupes fonctionnels X et Y ne sont pas réactifs l'un avec l'autre et le composant supplémentaire E comprend deux groupes fonctionnels, dont l'un est réactif avec les groupes fonctionnels X et l'autre est réactif avec les groupes fonctionnels Y.

7. Procédé de préparation d'une composition polymérique thermoplastique selon les revendications 1 à 6, ledit procédé comprenant les étapes de
- fourniture des composants A, B, C, D et, le cas échéant, E.
- introduction desdits composants dans une extrudeuse, formant ainsi un mélange homogène,
- extrusion dudit mélange homogène.

8. Utilisation d'une composition thermoplastique selon les revendications 1 à 6 en tant qu'adhésif.

9. Article multicouche dans lequel au moins une couche comprend une composition polymérique thermoplastique selon les revendications 1 à 6.

10. Article multicouche selon la revendication 9, qui est choisi parmi un tube, un tuyau ou une feuille.

11. Utilisation d'un tuyau selon la revendication 10, pour transporter des gaz ou des liquides, de préférence du pétrole.
